# EUROPÄISCHE PATENTSCHRIFT

(11) **EP 3 775 537 B1**
(45) Veröffentlichungstag und Bekanntmachung des Hinweises auf die Patenterteilung: **06.03.2024**
(21) Anmeldenummer: 19715012.1
(22) Anmeldetag: 21.03.2019
(51) Int. Cl.: F03D 9/25, F03D 80/80, F03D 80/60

(54) **WINDTURBINE UND STEUERUNGSVERFAHREN DAFÜR**
WIND TURBINE AND CONTROL METHOD FOR THE SAME
ÉOLIENNE ET PROCÉDÉ DE COMMANDE ASSOCIÉ

(30) Priorität: 26.03.2018 DE 102018107104
(43) Veröffentlichungstag der Anmeldung: 17.02.2021
(73) Patentinhaber: Wobben Properties GmbH, 26607 Aurich (DE)
(72) Erfinder: ENSKONATUS, Kai, 26759 Hinte (DE)
(74) Vertreter: Eisenführ Speiser
(86) Internationale Anmeldenummer: PCT/EP2019/057127
(87) Internationale Veröffentlichungsnummer: WO 2019/185448

(56) Entgegenhaltungen:
- EP-A1- 2 988 001
- WO-A1-2013/021487
- US-A1- 2011 272 949

## Beschreibung

Die vorliegende Erfindung betrifft eine Windenergieanlage.

Einige Komponenten einer Windenergieanlage wie beispielsweise der elektrische Generator erzeugen Wärme, die abgeführt werden muss. Dazu weisen Windenergieanlagen typischerweise ein Kühlsystem auf.

EP 2 354 542 B1 beschreibt ein Kühlsystem für eine Windenergieanlage. Ein erster Wärmetauscher ist mit einem elektrischen Generator gekoppelt, um Wärme nach Außen abzugeben. Ein zweiter Wärmetauscher ist an den Rotor des Generators gekoppelt und dreht sich mit dem Rotor. Der sich drehende Wärmetauscher ist über eine Drehdurchführung mit einem Wärmetauscher an einem stehenden Teil der Windenergieanlage gekoppelt. Damit kann eine Kühlung des Rotors, d.h. des sich drehenden Teils der Windenergieanlage, realisiert werden.

In der prioritätsbegründenden deutschen Patentanmeldung hat das Deutsche Patent- und Markenamt die folgenden Dokumente recherchiert: EP 2 354 542 B1 und EP 2 521 252 B1. Beispiele für Lösungen nach dem Stand der Technik finden sich auch in den Dokumenten US 2011/272949 A1 EP 2 988 001 A1.

Es ist eine Aufgabe der vorliegenden Erfindung, eine Kühlung einer sich drehenden Komponente der Windenergieanlage zu verbessern.

Diese Aufgabe wird durch eine Windenergieanlage nach Anspruch 1 gelöst.

Somit weist die Windenergieanlage eine Gondel mit einem sich drehenden und einen stehenden Teil auf. Ferner ist ein Kühlkreislauf mit einer Kühleinheit in einem Wärmetauscher an dem stehenden Teil der Windenergieanlage und eine Drehdurchführung vorgesehen. Im Bereich der Drehdurchführung ist ein Auffangbehälter für Schleichmengen der Kühlflüssigkeit in dem Kühlkreislauf vorgesehen. Der Auffangbehälter ist mit einer Pumpe gekoppelt, um die sich in dem Auffangbehälter befindliche Kühlflüssigkeit in den Kühlkreislauf zurückzuführen.

Gemäß einem Aspekt der vorliegenden Erfindung können die Leitungen des Kühlkreislaufes in dem stehenden Teil der Windenergieanlage Absperrventile aufweisen, um den drehenden Teil des Systems vom stehenden Teil des Kühlsystems abzutrennen und um ein Auslaufen zu verhindern.

Gemäß einem Aspekt der vorliegenden Erfindung ist der Auffangbehälter gegenüber der Atmosphäre offen. Mittels der (Lenz)pumpe kann die Kühlflüssigkeit in einen Ausgleichsbehälter des Kühlkreislaufes gepumpt werden.

Der sich auf dem stehenden Teil der Windenergieanlage befindliche Wärmetauscher kann beispielsweise als Rückkühler außen an der Gondel der Windenergieanlage vorgesehen sein.

Gemäß einem weiteren Aspekt der vorliegenden Erfindung ist ein Magnetventil vorgesehen, um einen Ausgleichsbehälter für den Lenzvorgang drucklos zu machen. Damit kann die sich in dem Auffangbehälter befindliche Flüssigkeit über die Lenzpumpe in einen Ausgleichsbehälter gepumpt werden, wobei dieser durch das Magnetventil drucklos gemacht werden kann. Die Lenzpumpe, ein Pumpenmodul in dem Kältekreislauf und das Magnetventil können über eine Steuereinheit gesteuert werden.

Durch den Verschleiß von Drehdurchführungen kommt es unweigerlich zu einer Leckrate des durch die Drehdurchführung durchfließenden Kältemittels. Dies führt zu einer Erhöhung des Wartungsaufwandes. Gemäß der Erfindung wird die leckende Flüssigkeit aufgefangen. Dies ist vorteilhaft, weil damit ein kontinuierlicher Betrieb möglich wird, d. h. die Anlage muss nicht stillgelegt werden, um das geleckte Fluid zu entfernen. Über eine Füllstandsüberwachung in dem Leckage-Auffangbehälter kann die Pumpe zum Abpumpen der Kühlflüssigkeit in dem Leckage-Auffangbehälter gesteuert werden. Die Laufzeit der Pumpe kann Rückschlüsse gewähren auf den Verschleißgrad der Drehdurchführung. Je öfter und je länger die Lenzpumpe läuft, desto größer ist die Leckrate und damit auch der Verschleißgrad.

Gemäß einem Aspekt der vorliegenden Erfindung können federrücklaufbetriebene Absperrklappen vorgesehen werden, wenn die Leckrate größer ist als die Pumpe fördern kann. Die Absperrklappen können vor und hinter der Drehdurchführung vorgesehen werden und können dazu dienen, dass der drehende Teil vom stehenden Teil getrennt wird, um ein Auslaufen des Systems zu verhindern. In diesem Fall kann ein Austausch der verschleißbehafteten Komponenten oder eine Instandsetzung durchgeführt werden.

Mit einer erfindungsgemäßen Windenergieanlage können die Rotoren forciert gekühlt werden. Dies kann durch eine Mantelkühlung oder durch eine direkte Polschuhkühlung erfolgen. Ferner kann eine schalloptimierte und drehzahlreduzierte Betriebsart effizienter gestaltet werden. Des Weiteren kann ein ausgeglichener Temperaturhaushalt zwischen Stator und Rotor ermöglicht werden. Hierdurch kann eine Regelung des Luftspaltes ermöglicht werden. Ferner kann die Leistungsdichte des Generators gesteigert werden.

Gemäß einem Aspekt der vorliegenden Erfindung kann ein vollständig von der Umgebung gekapselter Generator ermöglicht werden, der keine Luftkühlung mehr benötigt.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung, und
- Fig. 2: zeigt eine schematische Darstellung eines Kühlsystems für die Windenergieanlage von Fig. 1.

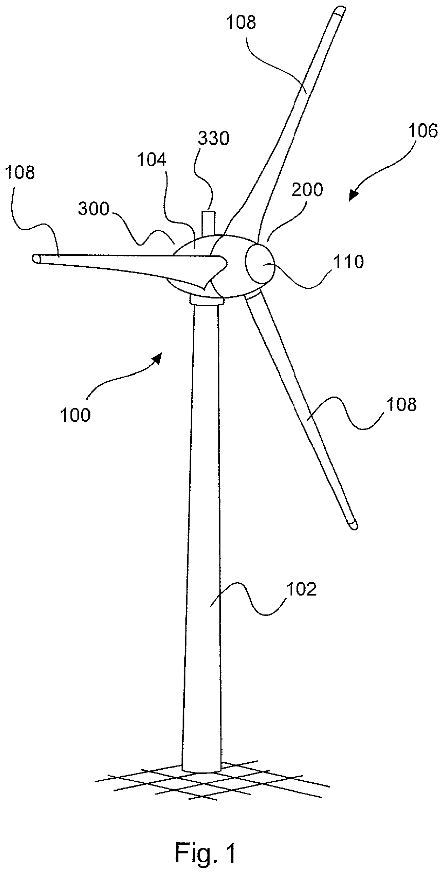

Fig. 1 zeigt eine schematische Darstellung einer Windenergieanlage gemäß der Erfindung. Die Windenergieanlage 100 weist einen Turm 102 mit einer Gondel 104 und einen elektrodynamischen Rotor 106 auf. Der elektrodynamische Rotor 106 weist beispielsweise drei Rotorblätter sowie einen Spinner auf. Der elektrodynamische Rotor 106 ist mit einem Rotor eines elektrischen Generators direkt oder über ein Getriebe gekoppelt. Durch Drehung des aerodynamischen Rotors 106 wird auch der Rotor des Generators in Rotation versetzt und der elektrische Generator kann damit Energie erzeugen. Im Bereich der Gondel 104 ist ein stehender Teil 300 und ein sich drehender Teil 200 vorgesehen. Der sich drehende Teil 200 entspricht dabei im Wesentlichen dem aerodynamischen Rotor 106. Ein Teil eines Kühlsystems kann als Rückkühler 330 auf der Gondel 104 platziert sein, um Kühlmittel im Kühlkreislauf abkühlen zu können, insbesondere durch den vorbeiwehenden Wind.

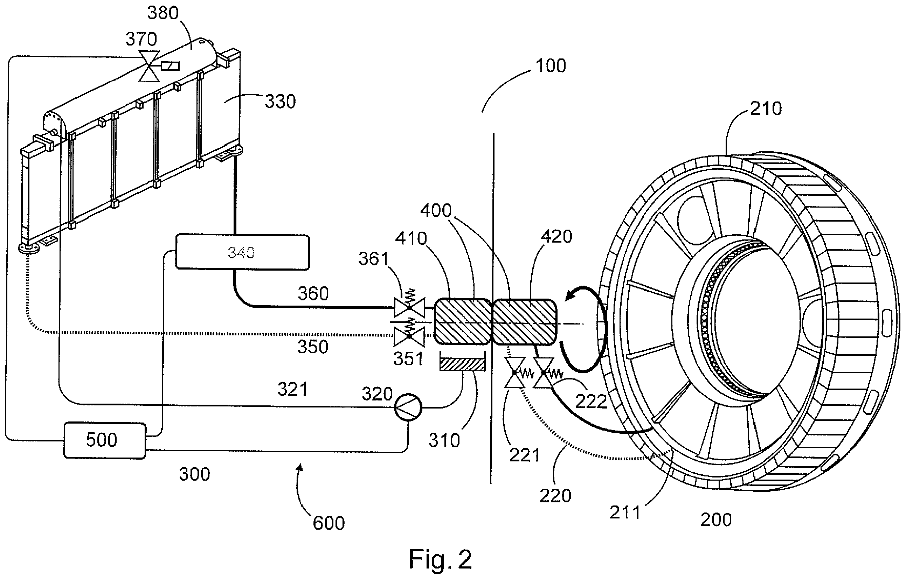

Fig. 2 zeigt eine schematische Darstellung eines Kühlkreislaufs für die Windenergieanlage von Fig. 1. In Fig. 2 ist ein Teil eines Kühlkreislaufs 600 gemäß der Erfindung dargestellt. Der Kühlkreislauf 600 dient dazu Komponenten in dem drehenden Teil 200 der Windenergieanlage 100 zu kühlen. Eine derartige Komponente kann z.B. einen Rotor 210 des elektrischen Generators der Windenergieanlage darstellen. In oder an dem Rotor 210 ist eine Flüssigkeitskühlung 211 vorgesehen, welche über Kühlleitungen 220 mit einer Drehdurchführung 400 gekoppelt ist. In dem stehenden Teil 300 der Windenergieanlage ist ein Rücckühler 330 zum Beispiel außen an der Gondel 104 vorgesehen. Dieser Rückkühler 330 ist Teil des Kühlkreislaufes 600 in dem stehenden Teil 300 der Windenergieanlage. Der Kühlkreislauf 600 weist ein Pumpenmodul 340, Kühlleitungen 360, 350 und einen stehenden Teil 410 der Drehdurchführung 400 auf. Ferner ist ein Auffangbehälter 310 im Bereich der Drehdurchführung 400 vorgesehen, um Kühlungsflüssigkeit, welche durch die Drehdurchführung 400 leckt, aufzufangen. Der Auffangbehälter 310 ist über eine Leitung 321 mit einer (Lenz)pumpe 320 und über ein steuerbares Ventil 370 mit einem Ausgleichsbehälter 380 des Kühlkreislaufes verbunden.

Optional ist an den Leitungen 360, 350 jeweils ein Sicherheitsventil 361, 351 vorgesehen, welches federbelastet ist und dazu dient das Kühlmittel in dem Kühlkreislauf 600 im stehenden Teil 300 der Windenergieanlage 100 zu halten, wenn es beispielsweise bei der Drehdurchführung 400 zu einem Leck kommt. Bei dem drehenden Teil 300 der Windenergieanlage sind ebenfalls zwei Sicherheitsventile 221, 222 an den Leitungen 220 vorgesehen.

Der Auffangbehälter 310, welcher im Bereich der Drehdurchführung 400, insbesondere im Bereich des stehenden Teils 410, angeordnet ist, dient dazu Kühlflüssigkeit, welche aus der Drehdurchführung 400 leckt (leckende Schleichmengen), aufzufangen. Mittels einer Pumpe 320 wie beispielsweise eine Lenzpumpe kann diese Flüssigkeit dem Ausgleichsbehälter 380 des Rückkühlers 330 zugeführt werden. Da der Auffangbehälter 310 drucklos vorgesehen ist, muss der Ausgleichsbehälter 380 mittels des Ventils 370 ebenfalls drucklos gemacht werden, um die Flüssigkeit dort zuführen zu können.

Die Windenergieanlage 100 weist eine Steuereinheit 500 auf, welche über das Pumpenmodul 340 den Kühlkreislauf 600 steuern kann. Die Steuereinheit 500 ist ebenfalls mit der Pumpe 320 und dem Ventil 370 gekoppelt. Um die in dem Auffangbehälter 310 aufgefangene Kühlflüssigkeit (welche aus der Drehdurchführung 400 geleckt ist) zurückzuführen, kann die Steuereinheit 500 die Pumpe 320 aktivieren und den Ausgleichsbehälter 380 mittels des Ventils 370 drucklos machen, so dass die in dem Auffangbehälter 310 gesammelte Kühlflüssigkeit dem Ausgleichsbehälter 380 zurückgeführt werden kann.

Gemäß einem Aspekt der vorliegenden Erfindung können die Absperrventile 361, 351 aktiviert werden, wenn die Flüssigkeitskühlung nicht in Betrieb ist oder, wenn die Pumpzeit der Lenzpumpe 320 größer als ein Schwellwert ist, was auf eine defekte Drehdurchführung hinweisen kann. Insbesondere können damit die Absperrventile 361, 351, welche federrücklaufend betrieben sein können, aktiviert werden, um ein Auslaufen der Kühlflüssigkeit zu verhindern.

Der erfindungsgemäße Kühlkreislauf 600 weist eine Kühleinheit 211 des Rotors 210, eine Drehdurchführung 400 und einen Wärmetauscher 330 an dem stehenden Teil der Gondel auf. Zwischen der Drehdurchführung und dem Rotor sind Leitungen 220 für Kühlflüssigkeit vorgesehen. Ferner sind zwischen der Drehdurchführung und dem Wärmetauscher 330 Kühlleitungen 350, 360 sowie ein Pumpenmödul 340 vorgesehen. In den Kühlleitungen 220, 350, 360 können optional Absperrventile vorgesehen werden. Der Auffangbehälter 310, die Pumpe 320, die Leitung 321 und das Ventil 370 sind nicht unmittelbar Bestandteil des Kühlkreislaufes 600, sondern dienen dazu Kühlflüssigkeit, welche aus der Drehdurchführung 400 leckt, aufzufangen und dem Ausgleichsbehälter 380 zuzuführen.

Mit dem erfindungsgemäßen Kühlsystem 600 bzw. Kühlkreislauf kann die Effizienz der Windenergieanlage gesteigert werden, weil insbesondere der Generator, sprich der Rotor des Generators, besser gekühlt werden kann.

Das erfindungsgemäße Kühlsystem 600 ist ferner vorteilhaft, weil damit ein ausgeglichener Temperaturhaushalt zwischen dem Stator und dem Rotor des Generators ermöglicht wird, insbesondere, weil der Rotor verbessert gekühlt werden kann, was strukturdynamisch Vorteile bietet. Ferner kann ein Teil der Masse des sich drehenden Teils der Windenergieanlage reduziert werden, weil eine effizientere Kühlung mittels einer Flüssigkeit möglich ist.

Gemäß einem Aspekt der vorliegenden Erfindung kann bei Verwendung einer Statornutenkühlung und einer direkten Polschuhkühlung bei einer fremderregten Maschine oder einer Rotormantelkühlung bei einer permanenterregten Maschine eine vollständig von der Umgebung gekapselte Windenergieanlage ermöglicht werden.

Gemäß einem Aspekt der vorliegenden Erfindung ist die Drehdurchführung im Wesentlichen im Bereich der Drehachse der Windenergieanlage vorgesehen.

## Patentansprüche

1. Windenergieanlage (100), mit
einer Gondel (104) mit einem stehenden Abschnitt (300) und einem drehenden Abschnitt (200), der einen Rotor (210) eines elektrischen Generators aufweist,
einem Kühlkreislauf (600), der eine Kühleinheit (211) an dem Rotor (210), einen Wärmetauscher (330) in oder an dem stehenden Teil (300) der Windenergieanlage, eine Kühlkreislauf-Pumpe (340) zum Pumpen von Kühlflüssigkeit in den Kühlkreislauf (600) und eine Drehdurchführung (400) aufweist, welche die Kühleinheit (211) des Rotors (210) mit dem Wärmetauscher (330) koppelt,
einem Leckage-Auffangbehälter (310) im Bereich der Drehdurchführung (400), welcher zum Auffangen von Leckflüssigkeiten der Drehdurchführung (400) ausgestaltet ist,
einer Pumpe (320) zum Abpumpen der sich in dem Leckage-Auffangbehälter (310) befindlichen Kühlflüssigkeit in einen Ausgleichsbehälter (380) des Kühlkreislaufes (600),
wobei der Ausgleichsbehälter (380) ein Ventil (370) aufweist, um den Ausgleichsbehälter drucklos zu machen, damit mittels der Pumpe (320) Flüssigkeit aus dem Auffangbehälter (310) in den Ausgleichsbehälter (380) gepumpt werden kann, und
einer Steuereinheit (500), welche mit der Kühlkreislauf-Pumpe (340) und der Pumpe (320) gekoppelt ist, um mittels der Kühlkreislauf-Pumpe (340) den Kühlkreislauf zu steuern und mittels der Pumpe (320) ein Abpumpen von sich in dem Auffangbehälter (310) befindlicher Kühlflüssigkeit zu steuern.

2. Windenergieanlage nach Anspruch 1, wobei
der Wärmetauscher (330) sich an dem stehenden Abschnitt (300) befindet,
wobei der Ausgleichsbehälter (380) in dem stehenden Abschnitt (300) der Gondel (104) vorgesehen ist.

3. Windenergieanlage nach Anspruch 1 oder 2, wobei
der Kühlkreislauf (600) mindestens eine Kühlleitung (350, 360) zwischen einem stehenden Teil (410) der Drehdurchführung (400) und dem Wärmetauscher (330) aufweist,
wobei in jeder Kühlleitung (350, 360) ein Sicherheitsventil (351, 361) zum Sperren der Kühlleitung (350, 360) vorgesehen ist, um ein Auslaufen von Kühlflüssigkeit zu vermeiden.

4. Verfahren zum Steuern einer Windenergieanlage, welche eine Gondel (104) mit einem stehenden Abschnitt (300) und einem drehenden Abschnitt (200) aufweist, der einen Rotor (210) eines elektrischen Generators aufweist, wobei die Windenergieanlage einen Kühlkreislauf (600) mit einer Kühleinheit (211) an dem Rotor (210), einen Wärmetauscher (330) in oder an dem stehenden Teil (300) der Windenergieanlage, eine Kühlkreislauf-pumpe (340) und eine Drehdurchführung (400) aufweist, welche die Kühleinheit (211) des Rotors (210) mit dem Wärmetauscher (330) koppelt, mit den Schritten:
Auffangen von Leckflüssigkeit der Drehdurchführung (400) mittels eines Leckage-Auffangbehälters (310) im Bereich der Drehdurchführung,
Abpumpen der sich in dem Leckage-Auffangbehälter (310) befindlichen Kühlflüssigkeit in einen Ausgleichsbehälter (380) des Kühlkreislaufes,
wobei der Ausgleichsbehälter (380) ein Ventil (370) aufweist, um den Ausgleichsbehälter drucklos zu machen, damit mittels der Pumpe (320) Flüssigkeit aus dem Auffangbehälter (310) in den Ausgleichsbehälter (380) gepumpt werden kann,
Steuern der Kühlkreislauf-Pumpe (340), um den Kühlkreislauf zu steuern und
Steuern der Pumpe (320), um ein Abpumpen von sich in dem Auffangbehälter (310) befindlicher Kühlflüssigkeit zu steuern.

## Claims

1. Wind turbine (100), with
a nacelle (104) with a stationary section (300) and a rotating section (200), which comprises a rotor (210) of an electric generator,
a cooling circuit (600) comprising a cooling unit (211) on the rotor (210), a heat exchanger (330) in or on the stationary part (300) of the wind turbine, a cooling circuit pump (340) for pumping cooling liquid into the cooling circuit (600) and a rotary feedthrough (400) coupling the cooling unit (211) of the rotor (210) to the heat exchanger (330),
a leakage collection tank (310) in the area of the rotary feedthrough (400), which is configured to collect leakage fluids from the rotary feedthrough (400),
a pump (320) for pumping the cooling liquid from the leakage collection tank (310) into an expansion tank (380) of the cooling circuit (600),
wherein the expansion tank (380) has a valve (370) to depressurise the expansion tank so that liquid can be pumped from the collection tank (310) into the expansion tank (380) by means of the pump (320), and
a control unit (500), which is coupled to the cooling circuit pump (340) and the pump (320), in order to control the cooling circuit by means of the cooling circuit pump (340) and to control a pumping out of cooling liquid located in the collecting tank (310) by means of the pump (320).

2. Wind turbine according to claim 1, wherein
the heat exchanger (330) is located on the stationary section (300),
wherein the expansion tank (380) is provided in the stationary section (300) of the nacelle (104).

3. Wind turbine according to claim 1 or 2, wherein
the cooling circuit (600) has at least one cooling line (350, 360) between a stationary part (410) of the rotary feedthrough (400) and the heat exchanger (330),
wherein a safety valve (351, 361) is provided in each cooling line (350, 360) for blocking the cooling line (350, 360) in order to prevent cooling liquid from leaking.

4. A method of controlling a wind turbine comprising a nacelle (104) having a stationary section (300) and a rotating section (200) comprising a rotor (210) of an electric generator, the wind turbine comprising a cooling circuit (600) having a cooling unit (211) on the rotor (210), a heat exchanger (330) in or on the stationary part (300) of the wind turbine, a cooling circuit pump (340) and a rotary feedthrough (400) which couples the cooling unit (211) of the rotor (210) to the heat exchanger (330), comprising the steps of:
collecting leakage fluid from the rotary feedthrough (400) by means of a leakage collection tank (310) in the area of the rotary feedthrough,
pumping the cooling liquid in the leakage collection tank (310) into an expansion tank (380) of the cooling circuit,
wherein the expansion tank (380) has a valve (370) to depressurise the expansion tank so that liquid can be pumped from the collection tank (310) into the expansion tank (380) by means of the pump (320),
controlling of the cooling circuit pump (340) to control the cooling circuit and
controlling the pump (320) in order to control the pumping out of cooling liquid in the collection tank (310).

## Revendications

1. Eolienne (100) avec
une nacelle (104) avec une section fixe (300) et une section rotative (200) qui présente un rotor (210) d'un générateur électrique,
un circuit de refroidissement (600) qui présente une unité de refroidissement (211) au niveau du rotor (210), un échangeur de chaleur (330) dans ou sur la pièce fixe (300) de l'éolienne, une pompe de circuit de refroidissement (340) pour le pompage de liquide de refroidissement dans le circuit de refroidissement (600) et un passage tournant (400) qui couple l'unité de refroidissement (211) du rotor (210) à l'échangeur de chaleur (330),
un récipient collecteur de fuite (310) dans la zone du passage tournant (400) qui est configuré pour la collecte de liquides de fuite du passage tournant (400),
une pompe (320) pour le pompage du liquide de refroidissement se trouvant dans le récipient collecteur de fuite (310) dans un réservoir de compensation (380) du circuit de refroidissement (600),
dans laquelle le réservoir de compensation (380) présente une soupape (370) afin de dépressuriser le réservoir de compensation pour que du liquide puisse être pompé hors du récipient collecteur (310) dans le réservoir de compensation (380) au moyen de la pompe (320), et
une unité de commande (500) qui est couplée à la pompe de circuit de refroidissement (340) et à la pompe (320) afin de commander le circuit de refroidissement au moyen de la pompe de circuit de refroidissement (340) et de commander, au moyen de la pompe (320), un pompage du liquide de refroidissement se trouvant dans le récipient collecteur (310).

2. Eolienne selon la revendication 1, dans laquelle
l'échangeur de chaleur (330) se trouve sur la section fixe (300),
dans laquelle le réservoir de compensation (380) est prévu dans la section fixe (300) de la nacelle (104).

3. Eolienne selon la revendication 1 ou 2, dans laquelle
le circuit de refroidissement (600) présente au moins une conduite de refroidissement (350, 360) entre une partie fixe (410) du passage tournant (400) et l'échangeur de chaleur (330),
dans laquelle une soupape de sécurité (351, 361) est prévue dans chaque conduite de refroidissement (350, 360) pour le blocage de la conduite de refroidissement (350, 360) afin d'éviter une sortie du liquide de refroidissement.

4. Procédé de commande d'une éolienne qui présente une nacelle (104) avec une section fixe (300) et une section rotative (200) qui présente un rotor (210) d'un générateur électrique, dans lequel l'éolienne présente un circuit de refroidissement (600) avec une unité de refroidissement (211) au niveau du rotor (210), un échangeur de chaleur (330) dans ou sur la partie fixe (300) de l'éolienne, une pompe de circuit de refroidissement (340) et un passage tournant (400) qui couple l'unité de refroidissement (211) du rotor (210) à l'échangeur de chaleur (330), avec les étapes suivantes :
la collecte du liquide de fuite du passage tournant (400) au moyen d'un récipient collecteur de fuite (310) dans la zone du passage tournant,
le pompage du liquide de refroidissement se trouvant dans le récipient collecteur de fuite (310) dans un réservoir de compensation (380) du circuit de refroidissement,
dans lequel le réservoir de compensation (380) présente une soupape (370) afin de dépressuriser le réservoir de compensation pour que du liquide puisse être pompé hors du récipient collecteur (310) dans le réservoir de compensation (380) au moyen de la pompe (320),
la commande de la pompe de circuit de refroidissement (340) afin de commander le circuit de refroidissement et
la commande de la pompe (320) afin de commander un pompage du liquide de refroidissement se trouvant dans le récipient collecteur (310).
